# EUROPÄISCHE PATENTSCHRIFT

(11) **EP 3 241 678 B1**
(45) Veröffentlichungstag und Bekanntmachung des Hinweises auf die Patenterteilung: **10.04.2019**
(21) Anmeldenummer: 17165057.5
(22) Anmeldetag: 05.04.2017
(51) Int. Cl.: B32B 37/00, B32B 41/00

(54) **LAMINIERGERÄT**
LAMINATOR
LAMINOIR

(30) Priorität: 04.05.2016 DE 102016005372
(43) Veröffentlichungstag der Anmeldung: 08.11.2017
(73) Patentinhaber: Leitz ACCO Brands GmbH & Co KG, 70469 Stuttgart (DE)
(72) Erfinder: LEUTE, Kurt, 78176 Blumberg (DE); SCHNEIDER, Ulrich, 70563 Stuttgart (DE); SCHNEIDER, Thomas, 71229 Leonberg (DE)
(74) Vertreter: Patentanwälte Bregenzer und Reule Partnerschaftsgesellschaft mbB

(56) Entgegenhaltungen:
- GB-A- 2 456 121
- US-A1- 2010 307 690

## Beschreibung

Die Erfindung betrifft ein Laminiergerät gemäß Oberbegriff des Anspruchs 1 sowie ein Laminierverfahren, bei dem ein solches Laminiergerät zum Einsatz kommt, gemäß Oberbegriff des Anspruchs 9.

Bekannte Laminiergeräte weisen ein Gehäuse und eine im Gehäuse angeordnete Laminiervorrichtung auf, die dazu dient, Laminiergut aus Blattgut und Kunststofffolie zu einem Laminat zu verbinden. Das Laminiergut wird über einen Einführschlitz im Gehäuse eingeführt, wobei das Blattgut zwischen zwei Folien, die in der Regel an einer Kante miteinander verbunden sind, aufgenommen ist. Die Kante wird dabei in der Vorschubrichtung vorne liegend in das Gehäuse eingeführt. Die im Gehäuse angeordnete Laminiervorrichtung weist mindestens ein Rollenpaar mit zwei motorisch angetriebenen Rollen auf, welche beheizt werden, und zwischen welchen das Laminiergut durchgeführt wird. Die durch den motorischen Antrieb bewirkte Rotation der Rollen sorgt für den Vorschub des Laminierguts in der Vorschubrichtung und die Hitzeeinwirkung der am Laminiergut anliegenden Rollen bewirkt das eigentliche Laminieren, bei dem eine an der dem Blattgut zugewandten Seite der Folie haftende Klebstoffschicht aufgeschmolzen wird und sich mit dem Blattgut verbindet. Das so erhaltene Laminat wird in der Vorschubrichtung weiter vorgeschoben, bis es aus einem Austrittsspalt im Gehäuse ausgestoßen wird.

Moderne Laminiergeräte sind in der Lage, Laminiergut unterschiedlicher Dicke zu laminieren. Je dicker aber die Kunststofffolie ist, desto mehr Wärmeleistung muss die Laminiervorrichtung aufbringen. Um die Heizleistung an die Dicke des Laminierguts anpassen zu können, ist bei einigen Laminiergeräten die Möglichkeit gegeben, die Heizleistung manuell einzustellen, so dass bei konstanter Vorschubgeschwindigkeit durch Variation der Heizleistung die in das Laminiergut eingebrachte Wärmemenge variiert werden kann. Ein solches Laminiergerät ist beispielweise aus GB-A-2 456 121 bekannt. Nachteilig daran ist aber, dass das Aufheizen bzw. Abkühlen der Rollen stets einige Minuten in Anspruch nimmt.

Bei anderen Laminiergeräten wird die Wärmeeinbringung dadurch variiert, dass die Heizleistung konstant gehalten wird, während die Vorschubgeschwindigkeit durch entsprechende Regelung des Gleichstrommotors varriiert wird. Dickeres Laminiergut wird langsamer vorgeschoben, so dass während seines Verbleibs zwischen den beheizten Rollen eine größere Wärmemenge eingebracht werden kann. Zur Regelung der Vorschubgeschwindigkeit wird üblicherweise ein Hall-Sensor verwendet, der vor dem Laminiervorgang die Dicke des Laminierguts misst. Der Einsatz eines Hall-Sensors ist dabei zum einen aufwendig und zum anderen fehleranfällig.

Es ist daher Aufgabe der Erfindung, ein Laminiergerät der eingangs genannten Art derart weiterzubilden, dass es besser für Laminergut unterschiedlicher Dicke verwendet werden kann.

Diese Aufgabe wird erfindungsgemäß durch ein Laminiergerät mit den Merkmalen des Anspruchs 1 sowie ein Laminierverfahren mit den Merkmalen des Anspruchs 9 gelöst. Vorteilhafte Weiterbildungen der Erfindung sind Gegenstand der abhängigen Ansprüche.

Der Erfindung liegt der Gedanke zugrunde, die Vorschubgeschwindigkeit des Laminierguts mit Hilfe von messbaren Parametern der Laminiervorrichtung zu steuern, die durch die Dicke des Laminierguts beeinflusst werden. Dabei wird die Tatsache genutzt, dass sich beim Einführen von Laminiergut dem Antrieb der Rollen ein Hindernis entgegenstellt, das umso größer ist, je dicker das Laminiergut ist, und das sich unmittelbar in einer Verringerung der Drehzahl der Rollen bzw. der Drehzahl des ungeregelten Gleichstrommotors und einer Erhöhung des den Gleichstrommotor antreibenden elektrischen Antriebsstroms niederschlägt. Erfindungsgemäß ist eine Steuereinrichtung vorgesehen, die eine Messeinheit aufweist, die entweder den Antriebsstrom oder die Drehzahl der Rollen oder des Gleichstrommotors misst. Ersteres ist sehr günstig durch einen Messwiderstand im Stromkreis des Gleichstrommotors und eine Messung der am Messwiderstand abfallenden Spannung zu realisieren. Eine Messung der Drehzahl dagegen sollte genauer sein, erfordert aber ein Drehzahlmessgerät und somit etwas mehr Aufwand. Die Steuereinrichtung schließt vom gemessenen Antriebsstrom bzw. von der gemessenen Drehzahl auf die Dicke des Laminierguts und stellt anschließend durch Ansteuerung des Gleichstrommotors die Vorschubgeschwindigkeit passend zur ermittelten Dicke ein. Zu diesem Zweck kann sie einen Datenspeicher aufweisen, in dem für unterschiedliche gemessene Antriebsstromstärken bzw. Drehzahlen jeweils eine vorgegebene Vorschubgeschwindigkeit als Sollwert gespeichert ist, entweder in Tabellenform oder in Form eines Algorithmus. Zudem besteht die Möglichkeit, einen auf eine Blockade der Laminiervorrichtung hindeutenden zu starken Anstieg des Antriebsstroms bzw. zu starken Abfall der Drehzahl zu nutzen, um die Laminiervorrichtung in einen Fehlermodus zu schalten, in dem sich die Drehrichtung der Rollen umkehrt und das Laminiergut entgegen der Vorschubrichtung aus der Laminiervorrichtung entfernt wird.

Zweckmäßig weist die Laminiervorrichtung mindestens ein beheizbares Rollenpaar und ein in der Vorschubrichtung vor dem mindestens einen beheizbaren Rollenpaar angeordnetes unbeheiztes Rollenpaar auf. Das unbeheizte Rollenpaar erleichtert zum einen den Einzug des Laminierguts, dient zum anderen aber in erster Linie als Teil der Messeinheit: Der Antriebsstrom steigt an und die Drehzahl der Rollen des ersten Rollenpaars sowie die Drehzahl des Gleichstrommotors sinkt, sobald das Laminiergut zwischen die Rollen des ersten Rollenpaars eingezogen wird. Dabei wird bevorzugt, dass der Antriebsstrom bzw. die Drehzahl dann gemessen wird, wenn das Laminiergut zwischen die Rollen des unbeheizten Rollenpaars eingezogen worden ist und bevor es zwischen die Rollen des mindestens einen beheizbaren Rollenpaars eingezogen wird. Wenn das unbeheizte Rollenpaar in ausreichendem Abstand vor dem mindestens einen beheizbaren Rollenpaar angeordnet ist, kann sichergestellt werden, dass genügend Zeit zur Verfügung steht, die Vorschubgeschwindigkeit nach der Messung des Antriebsstroms bzw. der Drehzahl auf den gewünschten Wert einzustellen, indem der Gleichstrommotor die Rollen beschleunigt. Die Messung des Antriebsstroms bzw. der Drehzahl kann durch einen zwischen dem unbeheizten Rollenpaar und dem mindestens einen beheizbaren Rollenpaar angeordneten ersten Sensor ausgelöst werden, wenn dieser das Vorhandensein von Laminiergut erkennt.

Gemäß einer vorteilhaften Weiterbildung der Erfindung ist nach dem in der Vorschubrichtung letzten beheizbaren Rollenpaar ein zweiter Sensor zur Erkennung von Laminat angeordnet. Der erste und/oder der zweite Sensor kann dabei vorteilhaft als Lichtschranke ausgebildet sein. Der zweite Sensor dient der Kontrolle, ob das Laminiergut die Laminiervorrichtung richtig durchlaufen hat. Beispielsweise ist es ein häufiger Bedienfehler, das Laminiergut nicht mit der Kante der Kunststofffolie voran, sondern mit deren offenem Ende in das Gehäuse einzuführen, wobei sich die beiden Folienhälften aufspreizen und sich um die Rollen wickeln können. Vorteilhafterweise können die Rollenpaare angehalten und anschließend in entgegengesetzter Richtung zum Transport des Laminierguts entgegen der Vorschubrichtung angetrieben werden, wenn der zweite Sensor nicht innerhalb einer vorbestimmten Zeit nach Erkennung von Laminiergut durch den ersten Sensor das Vorhandensein eines Laminats erkennt. Die vorbestimmte Zeit entspricht dabei mindestens dem Abstand des ersten vom zweiten Sensor geteilt durch die Vorschubgeschwindigkeit.

Um die Dicke des Laminierguts besser nachvollziehbar bestimmen zu können, weisen die Rollen des unbeheizten Rollenpaars zweckmäßig eine härtere Mantelfläche auf als die Rollen des mindestens einen beheizbaren Rollenpaars. Der Messwert ist dann mit weniger Rauschen behaftet. Zudem ist vorteilhaft eine Regeleinrichtung zur Regelung des Gleichstrommotors vorgesehen, so dass die eingestellte Vorschubgeschwindigkeit zumindest innerhalb eines vorgegebenen Toleranzbereichs konstant gehalten werden kann. Die Regelung beschränkt sich dabei auf die Konstanthaltung der Vorschubgeschwindigkeit während des Laminiervorgangs, wohingegen vor dem Laminiervorgang und nach Beendigung des Laminiervorgangs der Gleichstrommotor bis zur Auslösung einer Messung der Drehzahl bzw. des Antriebsstroms in einem Leerlaufmodus ungeregelt betrieben wird. Während der Regelung besteht wiederum die Möglichkeit, eine Blockade der Laminiervorrichtung zu erkennen und durch Umkehr der Drehrichtung der Rollen das Laminiergut aus der Laminiervorrichtung zu entfernen.

Die Rollen des mindestens einen beheizbaren Rollenpaars werden zweckmäßig mit einer konstanten Heizleistung beheizt, so dass die dem Laminiergut zugeführte Wärmemenge ausschließlich mittels der einstellbaren Vorschubgeschwindigkeit variiert wird. Zudem wird bevorzugt, dass der Gleichstrommotor bereits vor Einführung von Laminiergut zwischen die Rollen der Rollenpaare diese in einem Leerlauf mit einer vorbestimmten Leerlaufgeschwindigkeit dreht, so dass die Messung des Antriebsstroms bzw. der Drehzahl gleich mit dem Einführen des Laminierguts in das Gehäuse beginnen kann, ohne dass die Rollen vorher beschleunigt werden müssen. Zudem werden die Rollen im Leerlauf dann gleichmäßiger mit Hitze beaufschlagt. Des Weiteren wird bevorzugt, dass während eines Aufheizvorgangs, während dem die Rollen des beheizbaren Rollenpaars noch nicht auf Betriebstemperatur sind, die Rollen in entgegengesetzter Richtung gedreht werden, so dass in das Gehäuse eingeführtes Laminiergut nicht in dieses eingezogen werden kann.

Im Folgenden wird die Erfindung anhand eines in der Zeichnung schematisch dargestellten Ausführungsbeispiels näher erläutert. Es zeigen
- Fig. 1: eine schematische Darstellung des Aufbaus einer Laminiervorrichtung und
- Fig. 2: Kennlinien eines typischen Gleichstrommotors mit über dem aufgebrachten Drehmoment aufgetragener Antriebsstromstärke und Drehzahl.

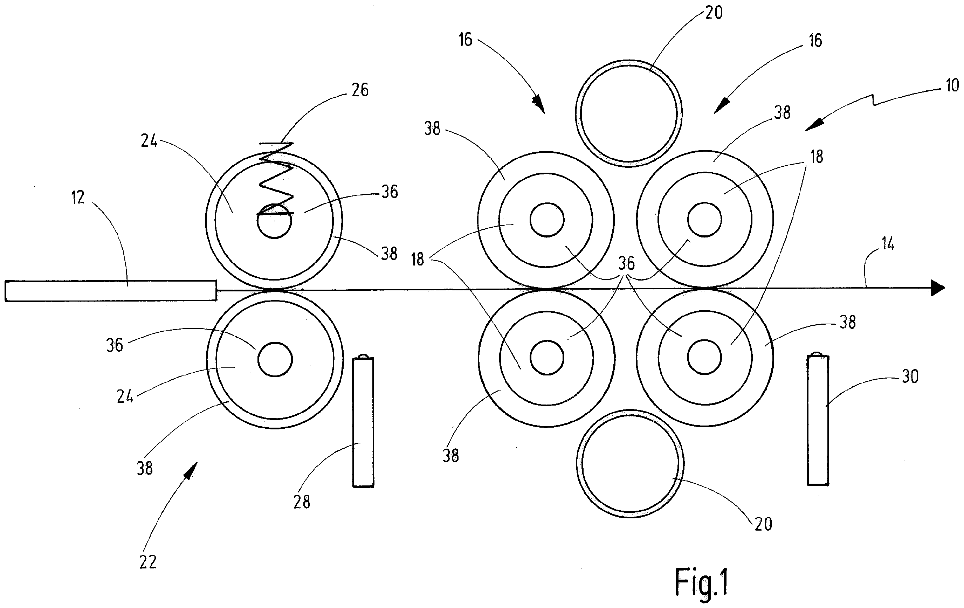

Das erfindungsgemäße Laminiergerät weist eine in einem nicht näher dargestellten Gehäuse angeordnete Laminiervorrichtung 10 auf (vgl. Fig. 1). Die Laminiervorrichtung 10 dient der Laminierung von Laminiergut 12 zu einem Laminat, wobei das Laminiergut 12 Blattgut aufweist, das auf beiden Seiten von einer Kunststofffolie bedeckt wird. Die Kunststofffolie bildet eine Tasche, wobei zwei Folienhälften an einer Kante miteinander verbunden sind. An ihren dem Blattgut zugewandten Seiten sind die Folienhälften mit einem Klebstoff beschichtet, der unter Hitzeeinwirkung schmilzt, so dass sich die Kunststofffolie mit dem Blattgut zum Laminat verbindet. Zu diesem Zweck wird das Laminiergut 12 mit der Kante voran in einer Vorschubrichtung 14 mit einer Vorschubgeschwindigkeit durch die Laminiervorrichtung 10 bewegt.

Die Laminiervorrichtung 10 weist zwei erste Rollenpaare 16 auf, von denen jedes zwei erste Rollen 18 aufweist. Das Laminiergut 12 wird zum Laminieren zwischen den Rollen 18 jedes der Rollenpaare 16 hindurch bewegt, wozu die Rollen 18 von einem nicht näher dargestellten Gleichstrommotor über ein Getriebe rotatorisch angetrieben werden, so dass sie für den Vorschub des Laminierguts 12 sorgen. Zudem werden die ersten Rollen 18 mittels einer Heizeinrichtung 20 beheizt und auf konstanter Temperatur gehalten. In der Vorschubrichtung 14 betrachtet befindet sich vor den ersten Rollenpaaren 16 ein zweites Rollenpaar 22 mit zweiten Rollen 24, die nicht beheizt sind. Auch die zweiten Rollen 24 werden vom Gleichstrommotor über das Getriebe rotatorisch angetrieben, so dass das Laminiergut 12 bei der Bewegung zwischen ihnen hindurch zum Vorschub in der Vorschubrichtung 14 beaufschlagt wird. Die in Fig. 1 obere der beiden zweiten Rollen 24 ist zudem von einer Feder 26 beaufschlagt am Gehäuse gelagert und wird durch die Rückstellkraft der Feder 26 gegen die untere der beiden zweiten Rollen 24 gedrängt. Die Laminiervorrichtung 10 weist zudem einen zwischen den ersten Rollenpaaren 16 und dem zweiten Rollenpaar 22 nahe letzterem angeordneten ersten Sensor 28 zur Erkennung von Laminiergut 12 sowie einen in der Vorschubrichtung 14 hinter den ersten Rollenpaaren 16 angeordneten zweiten Sensor 30 zur Erkennung von Laminat auf, der auch, entgegen der Darstellung in Fig. 1, zwischen den beiden ersten Rollenpaaren 16 angeordnet sein kann.

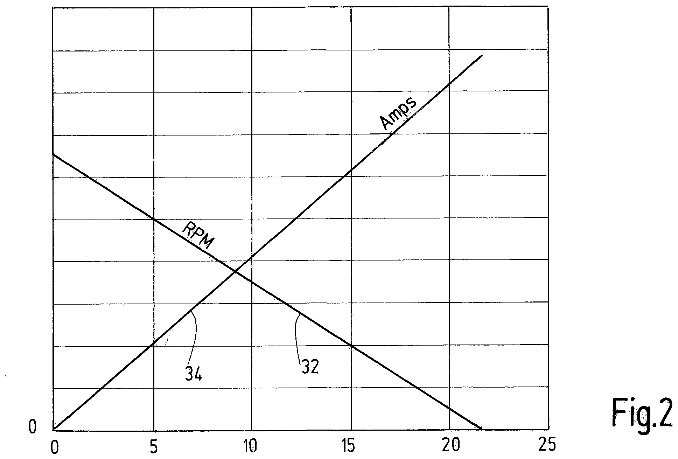

Vor dem Zuführen von Laminiergut 12 wird die Laminiervorrichtung 10 in einem Leerlauf betrieben, indem der Gleichstrommotor die ersten und zweiten Rollen 18, 24 mit einer vorbestimmten Leerlaufgeschwindigkeit dreht. Wird Laminiergut 12 zwischen die zweiten Rollen 24 des zweiten Rollenpaars 22 eingezogen, so muss der Gleichstrommotor ein Drehmoment aufbringen, das umso größer ist, je dicker das Laminiergut 12 ist. Wie sich aus dem Diagramm gemäß Fig. 2 ergibt, sinkt die Drehzahl 32 des Gleichstrommotors linear mit der Erhöhung des abgeforderten Drehmoments, während der den Gleichstrommotor antreibende elektrische Antriebsstrom 34 linear mit der Erhöhung des Drehmoments steigt. Das erfindungsgemäße Laminiergerät weist eine in der Zeichnung nicht näher dargestellte Steuereinrichtung auf mit einer Messeinheit, die zur Messung eines dieser beiden Parameter 32, 34 ausgebildet ist. Wenn das Laminiergut 12 zwischen die zweiten Rollen 24 eingezogen worden ist, was vom ersten Sensor 28 detektiert wird, misst die Messeinheit entweder die Drehzahl 32 des Gleichstrommotors bzw. die Drehzahl der zweiten Rollen 24 oder sie misst den Antriebsstrom 34. Mit Hilfe von in einem Datenspeicher der Steuereinrichtung gespeicherter Datensätze bestimmt die Steuereinrichtung aus dem Messwert die Dicke des Laminierguts 12. Anschließend gibt sie ein Signal an den Gleichstrommotor bzw. an eine den Gleichstrommotor regelnde Regeleinrichtung, die Vorschubgeschwindigkeit auf einen Sollwert einzustellen. Dieser Sollwert gewährleistet bei konstanter Heizleistung das gewünschte Laminierergebnis. Zu diesem Zweck sind im Datensatz des Datenspeichers für unterschiedliche Dicken des Laminierguts 12 bzw. die entsprechenden Messwerte für die Drehzahl 32 und den Antriebsstrom 34 die jeweils zugehörigen Sollwerte für die Vorschubgeschwindigkeit gespeichert. Der Abstand zwischen dem ersten Sensor 28 und den ersten Rollenpaaren 16 ist dabei so gewählt, dass der Gleichstrommotor die Rollen 18, 24 so beschleunigen kann, dass das Laminiergut 12 vor Erreichen der ersten Rollenpaare 16 die vorgegebene Vorschubgeschwindigkeit erreicht. Der zweite Sensor 30 dient der Kontrolle, ob das Laminiergut 12 den vorgesehenen Weg zwischen den ersten Rollen 18 hindurch genommen hat. Erkennt der zweite Sensor 30 nicht innerhalb einer vorbestimmten Zeit nach Erkennung des Laminierguts 12 durch den ersten Sensor 28 das Vorhandensein eines Laminats, so wird die Drehrichtung des Gleichstrommotors und damit die Drehrichtung der Rollen 18, 24 umgekehrt, so dass das Laminiergut 12 wieder aus der Laminiervorrichtung 10 hinausbewegt wird. Zudem dient der zweite Sensor 30 der Erkennung des Endes eines Laminiervorgangs, indem er zunächst die Ankunft des Laminats und dann dessen Abtransport von den ersten Rollenpaaren 16 weg erkennt.

Entsprechend ihren unterschiedlichen Aufgaben sind die zweiten Rollen 24 anders ausgebildet als die ersten Rollen 18. Sowohl die ersten Rollen 18 als auch die zweiten Rollen 24 weisen einen auf einem Kern 36 angeordneten Mantel 38 aus Gummi auf. Dieser ist bei den zweiten Rollen 24 deutlich dünner ausgeführt als bei den ersten Rollen 18, so dass die zweiten Rollen 24 eine härtere Mantelfläche aufweisen als die ersten Rollen 18. Dadurch erhält man beim Einzug des Laminierguts 12 besser reproduzierbare Anstiege des Antriebsstroms 34 bzw. besser reproduzierbare Verringerungen der Drehzahl 32.

Zusammenfassend ist folgendes festzuhalten: Die Erfindung betrifft ein Laminiergerät mit einer in einem Gehäuse aufgenommenen Laminiervorrichtung 10 zur Laminierung von Laminiergut 12 aus Blattgut und Kunststofffolie zu einem Laminat, wobei die Laminiervorrichtung 10 ein oder mehrere durch einen Gleichstrommotor rotatorisch angetriebene Rollenpaare 16, 22 zum Vorschub des Laminierguts 12 mit einer Vorschubgeschwindigkeit in einer Vorschubrichtung 14 zwischen den beiden Rollen 18, 24 jedes Rollenpaars 16, 22 hindurch aufweist, und wobei die Rollen 18 mindestens eines Rollenpaars 16 zum Verbinden des Blattguts mit der Kunststofffolie beheizbar sind. Erfindungsgemäß ist eine Steuereinrichtung vorgesehen mit einer Messeinheit zur Messung eines den Betriebszustand der Laminiervorrichtung 10 charakterisierenden Messwerts und zur Steuerung der Vorschubgeschwindigkeit des Laminierguts 12 in Abhängigkeit vom gemessenen Messwert, wobei der Messwert entweder der den Gleichstrommotor antreibende elektrische Antriebsstrom 34 oder die Drehzahl 32 des Gleichstrommotors oder der Rollen 18, 24 ist.

## Patentansprüche

1. Laminiergerät mit einer in einem Gehäuse aufgenommenen Laminiervorrichtung (10) zur Laminierung von Laminiergut (12) aus Blattgut und Kunststofffolie zu einem Laminat, wobei die Laminiervorrichtung (10) ein oder mehrere durch einen Gleichstrommotor rotatorisch angetriebene Rollenpaare (16, 22) zum Vorschub des Laminierguts (12) mit einer Vorschubgeschwindigkeit in einer Vorschubrichtung (14) zwischen den beiden Rollen (18, 24) jedes Rollenpaars (16, 22) hindurch aufweist, und wobei die Rollen (18) mindestens eines Rollenpaars (16) zum Verbinden des Blattguts mit der Kunststofffolie beheizbar sind, **gekennzeichnet durch** eine Steuereinrichtung mit einer Messeinheit zur Messung eines den Betriebszustand der Laminiervorrichtung (10) charakterisierenden Messwerts und zur Steuerung der Vorschubgeschwindigkeit des Laminierguts (12) in Abhängigkeit vom gemessenen Messwert, wobei der Messwert entweder der den Gleichstrommotor antreibende elektrische Antriebsstrom (34) oder die Drehzahl (32) des Gleichstrommotors oder der Rollen (18, 24) ist.

2. Laminiergerät nach Anspruch 1, **dadurch gekennzeichnet, dass** die Laminiervorrichtung (10) mindestens ein beheizbares Rollenpaar (16) und ein in der Vorschubrichtung (14) vordem mindestens einen beheizten Rollenpaar (16) angeordnetes unbeheiztes Rollenpaar (22) aufweist.

3. Laminiergerät nach Anspruch 2, **gekennzeichnet durch** einen zwischen dem unbeheizten Rollenpaar (22) und dem mindestens einen beheizbaren Rollenpaar (16) angeordneten ersten Sensor (28) zur Erkennung von Laminiergut (12).

4. Laminiergerät nach einem der vorangehenden Ansprüche, **gekennzeichnet durch** einen nach dem in der Vorschubrichtung (14) letzten beheizbaren Rollenpaar (16) angeordneten zweiten Sensor (30) zur Erkennung von Laminat.

5. Laminiergerät nach Anspruch 3 oder 4, **dadurch gekennzeichnet, dass** der erste Sensor (28) und/oder der zweite Sensor (30) eine Lichtschranke ist.

6. Laminiergerät nach einem der Ansprüche 2 bis 5, **dadurch gekennzeichnet, dass** die Rollen (24) des unbeheizten Rollenpaars (22) eine härtere Mantelfläche haben als die Rollen (18) des mindestens einen beheizbaren Rollenpaars (16).

7. Laminiergerät nach einem der vorangehenden Ansprüche, **dadurch gekennzeichnet, dass** die Steuereinrichtung einen Datenspeicher aufweist, in dem für unterschiedliche Antriebsstromstärken (34) bzw. Drehzahlen (32) jeweils ein vorgegebener Sollwert für die Vorschubgeschwindigkeit gespeichert ist.

8. Laminiergerät nach einem der vorangehenden Ansprüche, **gekennzeichnet durch** eine Regeleinrichtung zur Regelung des Gleichstrommotors zur Konstanthaltung einer vorgegebenen Vorschubgeschwindigkeit.

9. Verfahren zur Laminierung von Laminiergut (12) aus Blattgut und Kunststofffolie zu einem Laminat unter Verwendung eines Laminiergeräts nach einem der vorangehenden Ansprüche, **dadurch gekennzeichnet, dass** der Antriebsstrom (34) bzw. die Drehzahl (32) gemessen wird, nachdem das Laminiergut (12) zwischen die Rollen (18, 24) eines der Rollenpaare (16, 22) eingezogen worden ist, und dass die Vorschubgeschwindigkeit durch die Steuereinrichtung in Abhängigkeit vom gemessenen Antriebsstrom (34) bzw. von der gemessenen Drehzahl (32) eingestellt wird.

10. Verfahren nach Anspruch 9 unter Verwendung eines Laminiergeräts nach einem der Ansprüche 2 bis 8, **dadurch gekennzeichnet, dass** der Antriebsstrom (34) bzw. die Drehzahl (32) gemessen wird, nachdem das Laminiergut (12) zwischen die Rollen (24) des unbeheizten Rollenpaars (22) eingezogen worden ist und bevor es zwischen die Rollen (18) des mindestens einen beheizbaren Rollenpaars (16) eingezogen wird.

11. Verfahren nach Anspruch 10 unter Verwendung eines Laminiergeräts nach einem der Ansprüche 3 bis 8, **dadurch gekennzeichnet, dass** die Messung des Antriebsstroms (34) bzw. der Drehzahl (32) durch die Erkennung von Laminiergut (12) mittels des ersten Sensors (28) ausgelöst wird.

12. Verfahren nach einem der Ansprüche 9 bis 11, **dadurch gekennzeichnet, dass** das mindestens eine beheizbare Rollenpaar (16) mit einer konstanten Heizleistung beheizt wird.

13. Verfahren nach einem der Ansprüche 9 bis 12 unter Verwendung eines Laminiergeräts nach Anspruch 3 und nach einem der Ansprüche 4 bis 8, **dadurch gekennzeichnet, dass** die Rollenpaare (16, 22) angehalten und anschließend in entgegengesetzter Richtung zum Transport des Laminierguts (12) entgegen der Vorschubrichtung (14) angetrieben werden, wenn der zweite Sensor (30) nicht innerhalb einer vorbestimmten Zeit nach Erkennung von Laminiergut (12) durch den ersten Sensor (28) ein Laminat erkennt, wobei die vorbestimmte Zeit mindestens dem Abstand des ersten (28) vom zweiten Sensor (30) geteilt durch die Vorschubgeschwindigkeit entspricht.

14. Verfahren nach einem der Ansprüche 9 bis 13, **dadurch gekennzeichnet, dass** der Gleichstrommotor vor Einführung von Laminiergut (12) zwischen die Rollen (18, 24) der Rollenpaare (16, 22) diese in einem Leerlauf mit einer vorbestimmten Leerlaufgeschwindigkeit dreht.

15. Verfahren nach einem der Ansprüche 9 bis 14, **dadurch gekennzeichnet, dass** der Gleichstrommotor nach Einstellung der Vorschubgeschwindigkeit mittels einer Regeleinrichtung so geregelt wird, dass die eingestellte Vorschubgeschwindigkeit zumindest innerhalb eines vorgegebenen Toleranzbereichs konstant gehalten wird.

## Claims

1. Laminator comprising a laminating device (10) incorporated in a housing, for laminating product to be laminated (12) in sheet material and plastic film to form a laminate, wherein the laminating device (10) has one or more pairs of rollers (16, 22) driven to rotate by a DC motor for feeding the product to be laminated (12) at a feed rate in a feed direction (14) through the two rollers (18, 24) of each pair of rollers (16, 22), and wherein the rollers (18) of at least one pair of rollers (16) are heatable for joining the sheet material to the plastic film, **characterised by** a controller with a measuring unit for measuring a measured value characteristic of the operating mode of the laminating device (10) and for controlling the feed rate of the product to be laminated (12) as a function of the measured value measured, wherein the measured value is either the electrical drive current (34) driving the DC motor or the rotational speed (32) of the DC motor or the rollers (18, 24).

2. Laminator according to Claim 1, **characterised in that** the laminating device (10) has at least one pair of heatable rollers (16) and an unheated pair of rollers (22) arranged in front of the at least one pair of heated rollers (16), in the feed direction (14).

3. Laminator according to Claim 2, **characterised by** a first sensor (28) arranged between the unheated pair of rollers (22) and the at least one heatable pair of rollers (16) for detecting product to be laminated (12).

4. Laminator according to any one of the preceding claims, **characterised by** a second sensor (30) arranged after the last heatable pair of rollers (16) in the feed direction (14) for detecting laminate.

5. Laminator according to Claim 3 or 4, **characterised in that** the first sensor (28) and/or the second sensor (30) is a light barrier.

6. Laminator according to any one of Claims 2 to 5, **characterised in that** the rollers (24) of the unheated pair of rollers (22) have a harder outer surface than the rollers (18) of the at least one heatable pair of rollers (16).

7. Laminator according to any one of the preceding claims, **characterised in that** the controller has a data memory, in which for various drive current strengths (34) or rotational speeds (32) in each case a specified setpoint for the feed rate is stored.

8. Laminator according to any one of the preceding claims, **characterised by** a regulating unit for regulating the DC motor in order to maintain a specified feed rate.

9. Method for laminating product to be laminated (12) in sheet material and plastic film to form a laminate using a laminator according to any one of the preceding claims, **characterised in that** the drive current (34) or the rotational speed (32) is measured, after the product to be laminated (12) is drawn between the rollers (18, 24) of one of the pairs of rollers (16, 22), and **in that** the feed rate is set by the controller as a function of the measured drive current (34) or the measured rotational speed (32).

10. Method according to Claim 9 using a laminator according to any one of Claims 2 to 8, **characterised in that** the drive current (34) or the rotational speed (32) is measured, after the product to be laminated (12) is drawn between the rollers (24) of the unheated pair of rollers (22) and before it is drawn between the rollers (18) of the at least one heatable pair of rollers (16).

11. Method according to Claim 10, using a laminator according to any one of Claims 3 to 8, **characterised in that** the measurement of the drive current (34) or the rotational speed (32) by detecting product to be laminated (12) is triggered by means of the first sensor (28).

12. Method according to any one of Claims 9 to 11, **characterised in that** the at least one heatable pair of rollers (16) is heated with a constant heating power.

13. Method according to any one of Claims 9 to 12 using a laminator according to Claim 3 and according to any one of Claims 4 to 8, **characterised in that** the pair of rollers (16, 22) is halted and then driven in the opposite direction for the transport of the product to be laminated (12) against the feed direction (14), if the second sensor (30) within a predetermined time following detection of product to be laminated (12) by the first sensor (28) does not detect a laminate, wherein the predetermined time corresponds to at least the distance from the first (28) to the second sensor (30) divided by the feed rate.

14. Method according to any one of Claims 9 to 13, **characterised in that** the DC motor, before introduction of product to be laminated (12) between the rollers (18, 24) of the pair of rollers (16, 22), rotates these in idle mode at a predetermined idling speed.

15. Method according to any one of Claims 9 to 14, **characterised in that** the DC motor following setting of the feed rate is regulated by means of a regulating unit such that the set feed rate is constantly maintained at least within a specified tolerance range.

## Revendications

1. Plastifieuse ou laminoir, avec un dispositif de plastification (10) reçu dans un boîtier et destiné à plastifier en un produit plastifié un produit à plastifier ou à laminer (12) constitué d'un produit en feuille et d'un film de matière plastique, sachant que le dispositif de plastification (10) présente une ou plusieurs paires de rouleaux (16, 22) entraînées en rotation par un moteur à courant continu et destinées à faire avancer le produit à plastifier (12) à une vitesse d'avancement dans un sens d'avancement (14) entre les deux rouleaux (18, 24) de chaque paire de rouleaux (16, 22), et sachant que les rouleaux (18) d'au moins une paire de rouleaux (16) peuvent être chauffés afin d'assembler le produit en feuille au film de matière plastique, **caractérisée par** un équipement de commande doté d'une unité de mesure pour mesurer une valeur de mesure caractérisant l'état de fonctionnement du dispositif de plastification (10) et pour commander la vitesse d'avancement du produit à plastifier (12) en fonction de la valeur de mesure mesurée, sachant que la valeur de mesure est soit le courant électrique d'entraînement (34) entraînant le moteur à courant continu, soit la vitesse de rotation (32) du moteur à courant continu ou des rouleaux (18, 24).

2. Plastifieuse selon la revendication 1, **caractérisée en ce que** le dispositif de plastification (10) présente au moins une paire de rouleaux pouvant être chauffée (16) et une paire de rouleaux non chauffée (22) disposée avant la paire de rouleaux chauffée au moins unique (16) dans le sens d'avancement (14).

3. Plastifieuse selon la revendication 2, **caractérisée par** un premier capteur (28), destiné à détecter le produit à plastifier (12), disposé entre la paire de rouleaux non chauffée (22) et la paire de rouleaux pouvant être chauffée au moins unique (16).

4. Plastifieuse selon l'une des revendications précédentes, **caractérisée par** un deuxième capteur (30), destiné à détecter le produit plastifié, disposé après la dernière paire de rouleaux pouvant être chauffée (16) dans le sens d'avancement (14).

5. Plastifieuse selon la revendication 3 ou 4, **caractérisée en ce que** le premier capteur (28) et/ou le deuxième capteur (30) est une barrière photoélectrique.

6. Plastifieuse selon l'une des revendications 2 à 5, **caractérisée en ce que** les rouleaux (24) de la paire de rouleaux non chauffée (22) ont une surface d'enveloppe plus dure que les rouleaux (18) de la paire de rouleaux pouvant être chauffée au moins unique (16).

7. Plastifieuse selon l'une des revendications précédentes, **caractérisée en ce que** l'équipement de commande présente une mémoire de données dans laquelle est mémorisée, pour différentes intensités de courant d'entraînement (34) ou vitesses de rotation (32), une valeur de consigne respective prédéfinie pour la vitesse d'avancement.

8. Plastifieuse selon l'une des revendications précédentes, **caractérisée par** un équipement de régulation pour réguler le moteur à courant continu afin de maintenir constante une vitesse d'avancement prédéfinie.

9. Procédé pour plastifier en un produit plastifié un produit à plastifier (12), constitué d'un produit en feuille et d'un film de matière plastique, en utilisant une plastifieuse selon l'une des revendications précédentes, **caractérisé en ce que** le courant d'entraînement (34) ou la vitesse de rotation (32) est mesurée(e) après que le produit à plastifier (12) ait été tiré entre les rouleaux (18, 24) d'une des paires de rouleaux (16, 22), et **en ce que** la vitesse d'avancement est réglée par l'équipement de commande en fonction du courant d'entraînement mesuré (34) ou de la vitesse de rotation mesurée (32).

10. Procédé selon la revendication 9 en utilisant une plastifieuse selon l'une des revendications 2 à 8, **caractérisé en ce que** le courant d'entraînement (34) ou la vitesse de rotation (32) est mesuré(e) après que le produit à plastifier (12) ait été tiré entre les rouleaux (24) de la paire de rouleaux non chauffée (22) et avant qu'il soit tiré entre les rouleaux (18) de la paire de rouleaux pouvant être chauffée au moins unique (16).

11. Procédé selon la revendication 10 en utilisant une plastifieuse selon l'une des revendications 3 à 8, **caractérisé en ce que** la mesure du courant d'entraînement (34) ou de la vitesse de rotation (32) est déclenchée par la détection du produit à plastifier (12) au moyen du premier capteur (28).

12. Procédé selon l'une des revendications 9 à 11, **caractérisé en ce que** la paire de rouleaux pouvant être chauffée au moins unique (16) est chauffée avec une puissance de chauffage constante.

13. Procédé selon l'une des revendications 9 à 12 en utilisant une plastifieuse selon la revendication 3 et selon l'une des revendications 4 à 8, **caractérisé en ce que** les paires de rouleaux (16, 22) sont stoppées puis sont entrainées dans le sens contraire afin de transporter le produit à plastifier (12) à l'encontre du sens d'avancement (14), si le deuxième capteur (30) ne détecte pas un produit plastifié dans un temps prédéfini après la détection du produit à plastifier (12) par le premier capteur (28), sachant que le temps prédéfini correspond au moins à la distance entre le premier (28) et le deuxième capteur (30) divisée par la vitesse d'avancement.

14. Procédé selon l'une des revendications 9 à 13, **caractérisé en ce que** le moteur à courant continu, avant l'introduction du produit à plastifier (12) entre les rouleaux (18, 24) des paires de rouleaux (16, 22), fait tourner ceux-ci en marche à vide à une vitesse de marche à vide prédéterminée.

15. Procédé selon l'une des revendications 9 à 14, **caractérisé en ce que** le moteur à courant continu est, à la suite du réglage de la vitesse d'avancement, régulé au moyen d'un équipement de régulation de telle sorte que la vitesse d'avancement réglée est maintenue constante au moins dans une plage de tolérance prédéfinie.
